# EUROPEAN PATENT APPLICATION

(11) **EP 2 085 452 A2**
(43) Date of publication of application: **05.08.2009**
(21) Application number: 09250280.6
(22) Date of filing: 02.02.2009
(51) Int. Cl.: C09K 11/59, C09K 11/62, C09K 11/64, C09K 11/66, C09K 11/77

(54) **Green phosphor and display device including the same**

(30) Priority: 01.02.2008 KR 20080010676
(71) Applicant: Samsung SDI Co., Ltd., Suwon-si, Gyeonggi-do (KR)
(72) Inventor: Ji-Hyun, Kim , Samsung SDI Co.Ltd., Suwon-si, Gyeonggi-do (KR); Yoon-Chang, Kim , Samsung SDI Co.Ltd., Suwon-si, Gyeonggi-do (KR); Yong-Chan, You , Samsung SDI Co.Ltd., Suwon-si, Gyeonggi-do (KR); Do-Hyung, Park , Samsung SDI Co.Ltd., Suwon-si, Gyeonggi-do (KR); Ick-Kyu, Choi , Samsung SDI Co.Ltd., Suwon-si, Gyeonggi-do (KR); Min-Ju, Kim , Samsung SDI Co.Ltd., Suwon-si, Gyeonggi-do (KR); Gyeong-Jae, Heo , Samsung SDI Co.Ltd., Suwon-si, Gyeonggi-do (KR); Mi-Ran, Song , Samsung SDI Co.Ltd., Suwon-si, Gyeonggi-do (KR); Hyun-Deok, Lee , Samsung SDI Co.Ltd., Suwon-si, Gyeonggi-do (KR); Jay-Hyok, Song , Samsung SDI Co.Ltd., Suwon-si, Gyeonggi-do (KR); Sun-Hwa, Kwon , Samsung SDI Co.Ltd., Suwon-si, Gyeonggi-do (KR); Yu-Mi, Song , Samsung SDI Co.Ltd., Suwon-si, Gyeonggi-do (KR); Jin-Hyoung, Seo , Samsung SDI Co.Ltd., Suwon-si, Gyeonggi-do (KR); Young-Hun, Lee , Samsung SDI Co.Ltd., Suwon-si, Gyeonggi-do (KR); Ji-Hyun, Kim , Samsung SDI Co.Ltd., Suwon-si, Gyeonggi-do (KR); Young-Ki, Kim , Samsung SDI Co.Ltd., Suwon-si, Gyeonggi-do (KR)
(74) Representative: Taor, Simon Edward William

(57) **Abstract**

A green phosphor, including a first phosphor represented by Formula 1:

(Y₃₋ₓCeₓ)ₐAl_{b}O_{c} (1),

wherein x, a, b, and c satisfy the relations: 0 < x ≤1, 0.5 ≤a ≤3, 3 ≤b ≤ 9, and 2c=9a + 3b; and
a second phosphor including at least one of:
Zn₂SiO₄:Mn,
YBO₃:Tb,
Y₍₁₋ₓ₁₎Gdₓ₁Al₃(BO₃)₄:Tb, wherein x1 satisfies the relation 0 ≤x1 ≤1, Li₂Zn(Ge,θ)_{z}O₈:Mn, wherein θ includes Al or Ga, and z satisfies the relation 3 ≤z ≤4,
BaMgAl₁₀O₁₇:Mn,
BaMgAl₁₂O₁₉:Mn, and
Zn(Ga₁₋ₓ₂Alₓ₂)₂O₄:Mn, wherein x2 satisfies the relation 0.2 ≤x2 ≤0.8.

## Description

### BACKGROUND

### 1. Field

Embodiments relate to a green phosphor and a display device including the same.

### 2. Description of the Related Art

A stereoscopic image from a plasma display panel (PDP) may be realized by dividing 1 TV field (16.7 ms) into two subfields, respectively producing left and right stereoscopic images, and then projecting the stereoscopic images to left and right eyes of a user wearing goggles. Optical shutters may be mounted on the left and right sides of the goggles to project the selected stereoscopic image signal to both eyes of the user by connecting the left subfield and the right subfield.

The phosphor layers in the PDP for a stereoscopic image should have a lower decay time than that of a general PDP, because the conventional 1 TV field is divided in half to provide two subfields. Particularly, phosphors having a decay time of more than 4.0 ms may cause a crosstalk phenomenon, e.g., acquiring a left subfield image by the right eye, thereby remarkably deteriorating the resolution and distinction of a stereoscopic image.

A decay time of 5 ms or less may be required for a three dimensional ("3D") PDP. In addition, when the PDP panel is used for a long time, a severe decrease in brightness of the green phosphor may occur relative to the red and blue phosphors. Accordingly, a green phosphor having a short decay time may be required in order to realize a stereoscopic image.

### SUMMARY

Embodiments are therefore directed to a green phosphor and a display device including the same, which substantially overcome one or more of the problems due to the limitations and disadvantages of the prior art.

It is therefore a feature of an embodiment to provide a phosphor composition for a green discharge cell having a short decay time.

It is therefore another feature of an embodiment to provide a green phosphor having excellent color quality characteristics.

It is therefore another feature of an embodiment to provide a green phosphor having excellent brightness.

It is therefore another feature of an embodiment to provide a display device capable of displaying a 3D stereoscopic image.

At least one of the above and other features and advantages may be realized by providing a green phosphor, including a first phosphor represented by Formula 1:

(Y₃₋ₓCeₓ)ₐAl_{b}O_{c} (1),

wherein x, a, b, and c satisfy the relations: 0 < x ≤1, 0.5 ≤a ≤3, 3 ≤b ≤ 9, and 2c=9a + 3b; and a second phosphor including at least one of
Zn₂SiO₄:Mn,
YBO₃:Tb,
Y₍₁₋ₓ₁₎Gdₓ₁Al₃(BO₃)₄:Tb, wherein x1 satisfies the relation 0 ≤x1 ≤1,
Li₂Zn(Ge,θ)_{z}O₈:Mn, wherein θ includes Al or Ga, and z satisfies the relation 3 ≤z ≤4,
BaMgAl₁₀O₁₇:Mn,
BaMgAl₁₂O₁₉:Mn, and
Zn(Ga₁₋ₓ₂Alₓ₂)₂O₄:Mn, wherein x2 satisfies the relation 0.2 ≤x2 ≤0.8.
x, a, and b may satisfy the relations: 0 < x ≤0.1, 0.5 ≤a ≤1.5, and 4 ≤b ≤6.

The first phosphor and the second phosphor may be included in a weight ratio of about 10:90 to about 90:10.

The first phosphor and the second phosphor may be included in a weight ratio of about 30:70 to about 60:40.

The second phosphor may include Y₍₁₋ₓ₁₎Gdₓ₁Al₃(BO₃)₄:Tb, and the first phosphor and the second phosphor may be included in a weight ratio of about 80:20 to about 10:90.

The second phosphor may include Li₂Zn(Ge,θ)_{z}O₈:Mn, and the first phosphor and the second phosphor may be included in a weight ratio of about 40:60 to about 80:20.

The second phosphor may include Zn₂SiO₄:Mn, and the first phosphor and the second phosphor may be included in a weight ratio of about 80:20 to about 50:50.

The second phosphor may include Zn₂SiO₄:Mn and Y₍₁₋ₓ₁₎Gdₓ₁Al₃(BO₃)₄:Tb, and the first phosphor and the second phosphor may be included in a weight ratio of about 25:75 to about 40:60.

The second phosphor may include Zn₂SiO₄:Mn and at least one of BaMgAl₁₀O₁₇:Mn or BaMgAl₁₂O₁₉:Mn, and the first phosphor and the second phosphor may be included in a weight ratio of about 40:60 to about 45:55.

The second phosphor may include Y₍₁₋ₓ₁₎Gdₓ₁Al₃(BO₃)₄:Tb and Li₂Zn(Ge,θ)_{z}O₈:Mn, and first phosphor and the second phosphor may be included in a weight ratio of about 25:75 to about 40:60.

The second phosphor may further include a co-activator including Ce.

The Zn₂SiO₄:Mn may further include a metal oxide layer.

The metal oxide layer may include at least one of Al₂O₃, MgO, Y₂O₃, and La₂O₃.

The green phosphor may have a decay time of about 5 ms or less.

The green phosphor may have a decay time of about 0.5 ms to about 5 ms.

The second phosphor may include Zn₂SiO₄:Mn and Y₍₁-ₓ₁₎Gdₓ₁Al₃(BO₃)₄:Tb. The first and the second phosphors may be included in a weight ratio of about 25:75 to about 40:60. The Zn₂SiO₄:Mn and Y₍₁-ₓ₁₎Gdₓ₁Al₃(BO₃)₄:Tb, may be included in the second phosphor in a weight ratio of about 10:90 to about 80:20.

At least one of the above and other features and advantages may also be realized by providing a display device, including a green phosphor including a first phosphor represented by Formula 1:

(Y₃₋ₓCeₓ)ₐAl_{b}O_{c} (1),

wherein x, a, b, and c satisfy the relations: 0 < x ≤1, 0.5 ≤a ≤3, 3 ≤b ≤ 9, and 2c=9a + 3b; and
a second phosphor including at least one of:
Zn₂SiO₄:Mn,
YBO₃:Tb,
Y₍₁₋ₓ₁₎Gdₓ₁Al₃(BO₃)₄:Tb, wherein x1 satisfies the relation 0 ≤x1 ≤1,
Li₂Zn(Ge,θ)_{z}O₈:Mn, wherein θ includes Al or Ga, and z satisfies the relation 3 ≤z ≤4,
BaMgAl₁₀O₁₇:Mn,
BaMgAl₁₂O₁₉:Mn, and
Zn(Ga₁₋ₓ₂Alₓ₂)₂O₄:Mn, wherein x2 satisfies the relation 0.2 ≤x2 ≤0.8.
x, a, and b may satisfy the relations: 0 < x ≤0.1, 0.5 ≤a ≤1.5, and 4 ≤b ≤6.

The first phosphor and the second phosphor may be included in a weight ratio of about 10:90 to about 90:10.

The first phosphor and the second phosphor may be included in a weight ratio of about 30:70 to about 60:40.

The second phosphor may include Y₍₁₋ₓ₁₎Gdₓ₁Al₃(BO₃)₄:Tb, and the first phosphor and the second phosphor may be included in a weight ratio of about 80:20 to about 10:90.

The second phosphor may include Li₂Zn(Ge,θ)_{z}O₈:Mn, and the first phosphor and the second phosphor may be included in a weight ratio of about 40:60 to about 80:20.

The second phosphor may include Zn₂SiO₄:Mn, and the first phosphor and the second phosphor may be included in a weight ratio of about 80:20 to about 50:50.

The second phosphor may include Zn₂SiO₄:Mn and Y₍₁₋ₓ₁₎Gdₓ₁Al₃(BO₃)₄:Tb, and the first phosphor and the second phosphor may be included in a weight ratio of about 25:75 to about 40:60.

The second phosphor may include Zn₂SiO₄:Mn and at least one of BaMgAl₁₀O₁₇:Mn or BaMgAl₁₂O₁₉:Mn, and the first phosphor and the second phosphor may be included in a weight ratio of about 40:60 to about 45:55.

The second phosphor may include Y₍₁₋ₓ₁₎Gdₓ₁Al₃(BO₃)₄:Tb and Li₂Zn(Ge,θ)_{z}O₈:Mn, and first phosphor and the second phosphor may be included in a weight ratio of about 25:75 to about 40:60.

The second phosphor may further include a co-activator including Ce.

The Zn₂SiO₄:Mn may further include a metal oxide layer.

The metal oxide layer may include at least one of Al₂O₃, MgO, Y₂O₃, and La2O₃.

The green phosphor may have a decay time of about 5 ms or less.

The green phosphor may have a decay time of about 0.5 ms to about 5 ms.

The display device may realize three-dimensional stereoscopic images.

According to a first aspect of the invention there is provided a green phosphor as set out in claim 1. Preferred features of this aspect are set out in claims 1-18.

According to a second aspect of the invention there is provided a display device as set out in claim 19. Preferred features of this aspect are set out in claim 20.

### BRIEF DESCRIPTION OF THE DRAWING

The above and other features and advantages will become more apparent to those of ordinary skill in the art by describing in detail exemplary embodiments thereof with reference to the attached drawings, in which:
FIG. 1 illustrates a partial exploded perspective view of a plasma display panel according to an embodiment;
FIG. 2 illustrates Table 1, showing Relative brightness, CIE color coordinate, and Decay time for Examples 1 to 8 and Comparative Examples 1 and 2;
FIG. 3 illustrates Table 2, showing Relative brightness, CIE color coordinate, and Decay time for Examples 9 to 13, Reference Examples 1 to 3, and Comparative Examples 1 and 3;
FIG. 4 illustrates Table 3, showing Relative brightness, CIE color coordinate, and Decay time for Examples 14 to 17, Reference Examples 4 to 7, and Comparative Example 1;
FIG. 5 illustrates Table 4, showing Relative brightness, CIE color coordinate, and Decay time for Examples 18 to 21 and Comparative Examples 4 to 6;

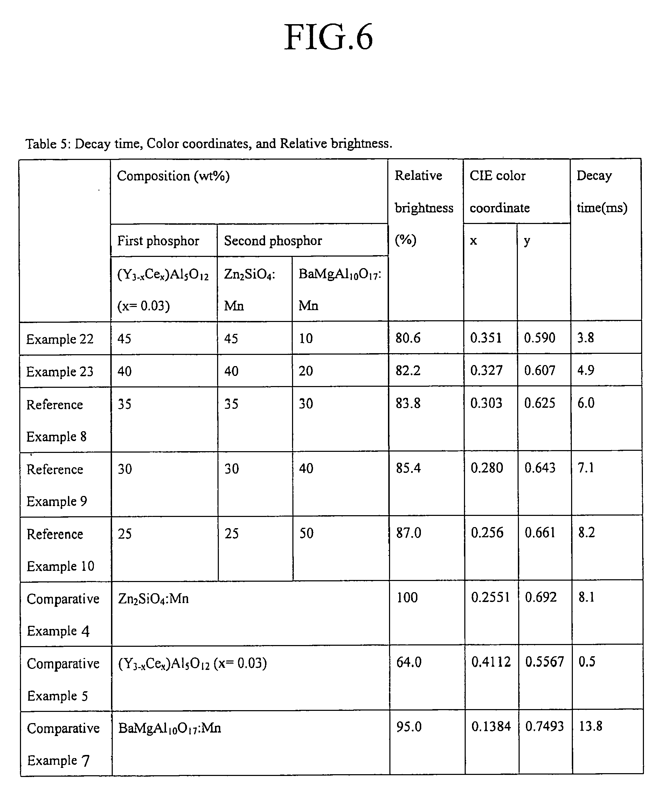

FIG. 6 illustrates Table 5, showing Relative brightness, CIE color coordinate, and Decay time for Examples 22 and 23, Reference Examples 8 to 10, and Comparative Examples 4, 5, and 7; and
FIG. 7 illustrates Table 6, showing Relative brightness, CIE color coordinate, and Decay time for Examples 24 to 27, Reference Example 11, and Comparative Examples 4 and 6.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the expressions "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" includes the following meanings: A alone; B alone; C alone; both A and B together; both A and C together; both B and C together; and all three of A, B, and C together. Further, these expressions are open-ended, unless expressly designated to the contrary by their combination with the term "consisting of." For example, the expression "at least one of A, B, and C" may also include an n^{th} member, where n is greater than 3, whereas the expression "at least one selected from the group consisting of A, B, and C" does not.

As used herein, the expression "or" is not an "exclusive or" unless it is used in conjunction with the term "either." For example, the expression "A, B, or C" includes A alone; B alone; C alone; both A and B together; both A and C together; both B and C together; and all three of A, B and, C together, whereas the expression "either A, B, or C" means one of A alone, B alone, and C alone, and does not mean any of both A and B together; both A and C together; both B and C together; and all three of A, B and C together.

As used herein, the terms "a" and "an" are open terms that may be used in conjunction with singular items or with plural items. For example, the term "a metal oxide" may represent a single compound, e.g., aluminum oxide, or multiple compounds in combination, e.g., aluminum oxide mixed with magnesium oxide.

As used herein, the term "decay time" means the time for decreasing optical volume expressed from a phosphor to 1/10 of the initial optical volume.

Embodiments relate to a green phosphor for a plasma display panel requiring a shorter decay time than that of a red or blue phosphor, because the green phosphor has a wavelength that is more easily acquired by the naked eye.

The green phosphor according to an embodiment may be excited by vacuum ultraviolet (VUV) rays to display color, and may include a first phosphor represented by Formula 1 and a second phosphor including at least one of Zn₂SiO₄:Mn, YBO₃:Tb, Y₍₁₋ₓ₁₎GdₓᵢAl₃(BO₃)₄:Tb (x1 may be about 0 to about 1), Li₂Zn(Ge,θ)_{z}O₈:Mn (θ may be Al or Ga, and z may be about 3 to about 4), BaMgAl₁₀O₁₇:Mn, BaMgAl₁₂O₁₉:Mn, and Zn(Ga₁₋ₓ₂Alₓ₂)₂O₄:Mn (x2 may be about 0.2 to about 0.8).

(Y₃₋ₓCeₓ)ₐAl_{b}O_{c} (1)

In Formula 1, x, a, b, and c may satisfy the relations: 0 < x ≤1, 0.5 ≤a ≤ 3, 3 ≤b ≤9, and 2c=9a + 3b. Preferably, x, a, and b satisfy the relations: 0 < x ≤0.1, 0.5 ≤a ≤1.5, and 4 ≤b ≤6.

The second phosphor may further include a co-activator including Ce. Preferably, the second phosphor includes at least one of Zn₂SiO₄:Mn and Y₍₁₋ₓ₁₎Gdₓ₁Al₃(BO₃)₄:Tb (x1 is 0 to 1). When the second phosphor includes Zn₂SiO₄:Mn, the Zn₂SiO₄:Mn may be formed with a metal oxide on the surface thereof, to create a positive surface charge. The metal oxide layer may include at least one of Al₂O₃, MgO, Y₂O₃, and La₂O₃. The thickness of the metal oxide layer may be adjusted as required.

The weight ratio of the first phosphor and the second phosphor may be adjusted to alter the brightness, the color coordinate characteristic, and the decay time of the green phosphor. The weight ratio of the first phosphor and the second phosphor may be about 10:90 to about 90:10. Preferably, the weight ratio is about 30:70 to about 60:40.

The weight ratio of the first and second phosphors may be adjusted depending upon the compound(s) used for the second phosphor. When the second phosphor includes Y₍₁₋ₓ₁)Gdₓ₁Al₃(BO₃)₄:Tb by itself or with another, the weight ratio of the first and second phosphors may be about 80:20 to about 10:90. When the second phosphor includes Li₂Zn(Ge,θ)_{z}O₈:Mn, the weight ratio of the first and second phosphors may be about 40:60 to about 80:20. When the second phosphor includes Zn₂SiO₄:Mn, the weight ratio of the first and second phosphors may be about 80:20 to about 50:50.

When the second phosphor is prepared by mixing Zn₂SiO₄:Mn with Y₍₁₋ₓ₁₎Gdₓ₁Al₃(BO₃)₄:Tb, the weight ratio of the first and second phosphors may be about 25:75 to about 40:60. When the second phosphor is prepared by mixing Zn₂SiO₄:Mn with at least one of BaMgAl₁₀O₁₇:Mn and/or BaMgAl₁₂O₁₉:Mn, the weight ratio of the first and second phosphors may be about 40:60 to about 45:55. When the second phosphor is prepared by mixing Y(₁₋ₓ₁)Gdₓ₁Al₃(BO₃)₄:Tb with Li₂Zn(Ge,θ)_{z}O₈:Mn, the weight ratio of the first and second phosphors may be about 25:75 to about 40:60.

When the second phosphor is prepared by mixing at least two phosphors including Zn₂SiO₄:Mn, YBO₃:Tb, Y(₁₋ₓ₁)Gdₓ₁Al₃(BO₃)₄:Tb, Li₂Zn(Ge,θ)_{z}O₈:Mn, BaMgAl₁₀O₁₇:Mn, BaMgAl₁₂O₁₉:Mn, and Zn (Ga₁-ₓ₂Alₓ₂)₂O₄:Mn, the weight ratio thereof may be adjusted. When the second phosphor is prepared by mixing Zn₂SiO₄:Mn and Y(₁₋ₓ₁)Gdₓ₁Al₃(BO₃)₄:Tb, the weight ratio may be about 10:90 to about 80:20. When the second phosphor is prepared by mixing Zn₂SiO₄:Mn and at least one of BaMgAl₁₀O₁₇:Mn and/or BaMgAl₁₂O₁₉:Mn, the weight ratio may be about 90:10 to about 60:40. When the second phosphor is prepared by mixing Y₍₁₋ₓ₁₎Gdₓ₁Al₃(BO₃)₄:Tb and Li₂Zn(Ge,θ)_{z}O₈:Mn, the weight ratio may be about 25:75 to about 90:10.

Providing a second phosphor with a weight ratio according to an embodiment may help ensure a shorter decay time, as well as satisfactory brightness and color purity. The second phosphor in which at least two kinds of phosphors are mixed may exhibit improved brightness when compared to a phosphor using only a single second phosphor.

A green phosphor according to an embodiment may have a short decay time and no decrease in brightness, so that it may be used in a PDP. A green phosphor of an embodiment may be useful when driving a PDP at, e.g., about 120 Hz or more. According to another embodiment, a green phosphor of an embodiment may be useful in a display being driven at, e.g., about 160 Hz, or a device for displaying a 3D stereoscopic image. A green phosphor according to an embodiment having a short decay time of, e.g., about 5 ms or less may be particularly useful for a device for displaying a 3D image. Preferably, the decay time is about 0.5 ms to about 5 ms, and more preferably, about 2 ms to about 5 ms.

The green phosphor may have a color coordinate of about 0.15 ≤ x ≤ 0.41 and about 0.55 ≤ y ≤ 0.70 in the CIE color coordinate system. Preferably, the phosphor has a color coordinate of about 0.20 ≤ x ≤ 0.35 and about 0.58 ≤ y ≤ 0.70.

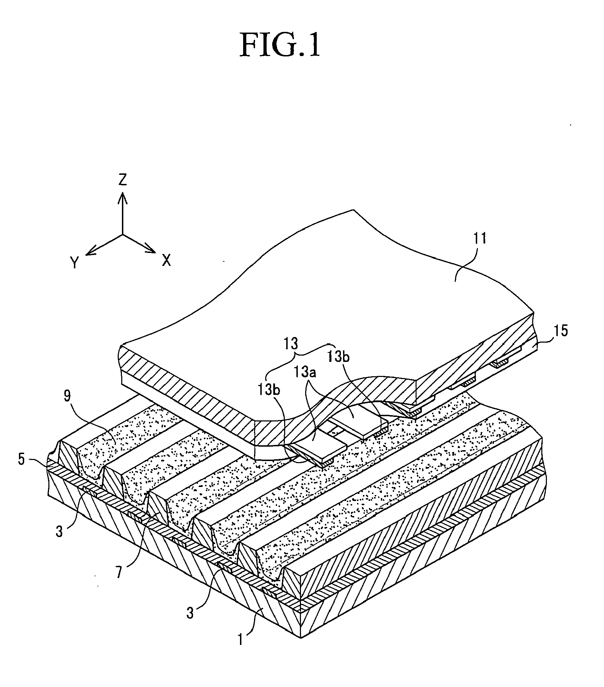

A PDP according to an embodiment may include the green phosphor. FIG. 1 illustrates a partial exploded perspective view of a PDP according to an embodiment.

As shown in FIG. 1, the PDP may include a first substrate 1 (rear substrate) and a second substrate 11 (front substrate) disposed substantially in parallel with each other, with a predetermined distance therebetween.

On the surface of the first substrate 1, a plurality of address electrodes 3 may be disposed in one direction (the Y direction in the drawing), and a first dielectric layer 5 may be disposed covering the address electrodes 3. A plurality of barrier ribs 7 may be formed on the first dielectric layer 5 between the address electrodes 3 at a predetermined height to form a discharge space.

The barrier ribs 7 may be formed in any suitable shape as long as the barrier ribs 7 partition the discharge space. The barrier ribs 7 may have diverse patterns. For example, the barrier ribs 7 may be formed as an open-type, e.g., a stripe, or as a closed type, e.g., a waffle, a matrix, or a delta shape. Also, the closed-type barrier ribs may be formed such that a horizontal cross-section of the discharge space may be a polygon, e.g., a quadrangle, a triangle, or a pentagon, or a circle or an oval. Red (R), green (G), and blue (B) phosphor layers 9 may be disposed in discharge cells formed between the barrier ribs 7.

Display electrodes 13, each including a transparent electrode 13a and a bus electrode 13b, may be disposed in a direction crossing the address electrodes 3 (X direction in the drawing) on one surface of the second substrate 11 facing the first substrate 1. Also, a dielectric layer 15 may be disposed on the surface of the second substrate 11 while covering the display electrodes 13.

Discharge cells may be formed at positions where the address electrodes 3 of the first substrate 1 cross the display electrodes 13 of the second substrate 11. The discharge cells may be filled with a discharge gas.

With the above-described structure, address discharge may be achieved by applying an address voltage (Va) to a space between the address electrodes 3 and any one display electrode 13. When a sustain voltage (Vs) is applied to a space between a pair of display electrodes 13, an excitation source generated from the sustain discharge may excite a corresponding phosphor layer 9 to thereby emit visible light through the transparent second substrate 11. The excitation source may include VUV rays.

The following examples illustrate embodiments in more detail. The following examples are not more than specific examples, and the scope is not limited by the examples.

### Examples 1 to 8 and Comparative Examples 1 to 3

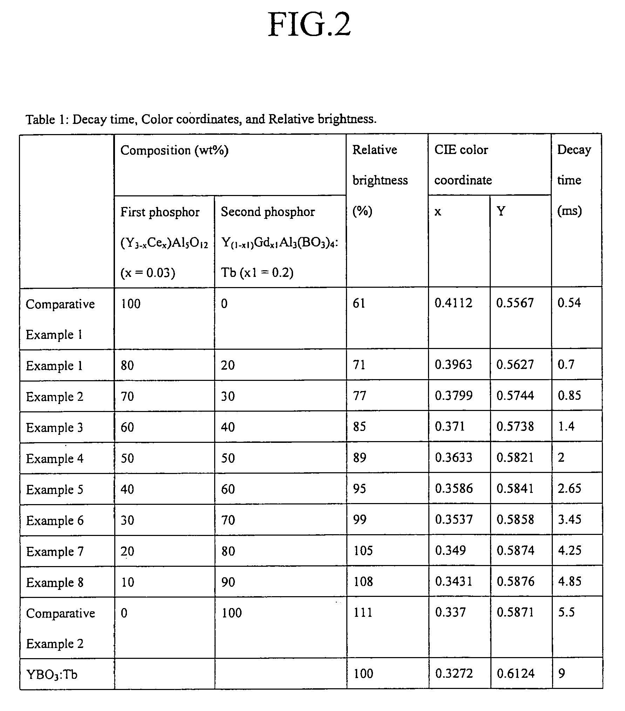

Green phosphors were prepared by mixing a first phosphor of (Y₃₋ₓCeₓ)Al₅O₁₂ (x is 0.03) and a second phosphor of Y₍₁₋ₓ₁₎Gdₓ₁Al₃(BO₃)_{4:}Tb (x1 is 0.2) in the compositions shown in Table 1 of FIG. 2.

The prepared phosphors were measured for their relative brightness, color coordinate, and decay time, and the results are shown in Table 1. The relative brightness was calculated as a value in relation to the reference value (100%) of the brightness of YBO₃:Tb. Table 1 also shows the results of color coordinate and decay time of YBO₃:Tb.

As shown in Table 1, the phosphors according to each of Examples 1 to 8 had a decay time of about 5 ms or less. The phosphors of the Examples also exhibited a relative brightness that was higher than that of Comparative Example 1 and similar to, or the same as, that of YBO₃:Tb. From the results, it may be estimated that the phosphors according to Examples 1 to 8 exhibit a display driving property, e.g., a brightness saturation characteristic, which is superior to conventional phosphors.

Comparative Example 2, including only a second phosphor, exhibited good relative brightness, but the decay time was 5.5 ms, so it would not be useful in a PDP displaying a 3D stereoscopic image.

### Examples 9 to 13 and Reference Examples 1 to 3

Green phosphors were prepared by mixing a first phosphor of (Y₃₋ₓCeₓ)Al₅O₁₂ (x is 0.03) and a second phosphor of Li₂Zn(Ge,θ)_{z}O₈:Mn (θ=Ga, z is 3) in the compositions as shown in Table 2.

### Comparative Example 3

Li₂Zn(Ge,θ)_{z}O₈:Mn (θ=Ga, z is 3) was used for a green phosphor.

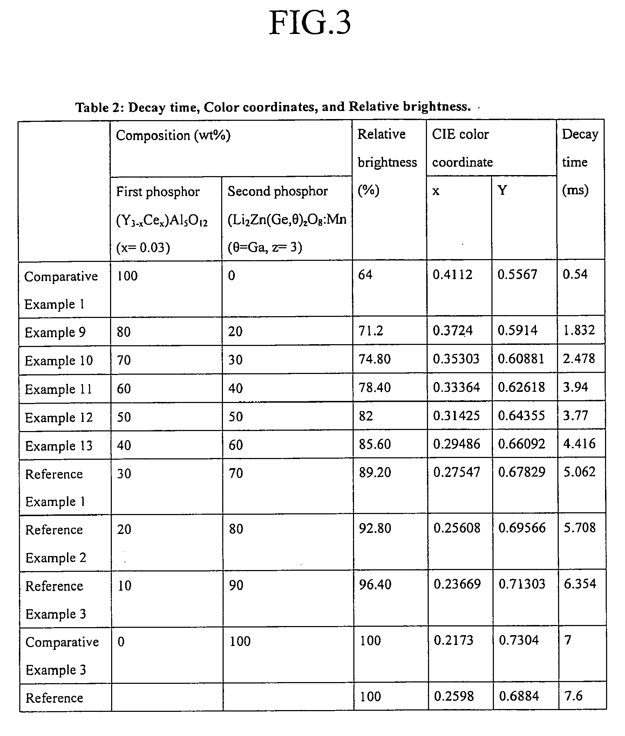

The phosphors prepared according to Examples 9 to 13, Reference Examples 1 to 3, and Comparative Example 3 were measured for their relative brightness, color coordinate, and decay time, and the results are shown in Table 2 of FIG. 3. The relative brightness was calculated as the relative value to the reference value (100%) of brightness of the phosphor prepared by mixing Zn₂SiO₄:Mn with YBO₃:Tb at a weight ratio of 80:20, which was formed with a metal oxide layer including Al₂O₃ and MgO. The phosphors prepared by mixing Zn₂SiO₄:Mn with YBO₃:Tb at a weight ratio of 80:20 were measured for their color coordinate and a decay time, and the results are shown in Table 2. For comparison, the color coordinate and decay time of the green phosphor according to Comparative Example 1 are also shown in Table 2. The relative brightness of the phosphor according to Comparative Example 1 was calculated as a value in relation to the reference value (100%) of brightness of the phosphor prepared by mixing Zn₂SiO₄:Mn with YBO₃:Tb at a weight ratio of 80:20. Therefore, the relative brightness value for Comparative Example 1 is different from the relative brightness for Comparative Example 1 shown in Table 1.

As shown in Table 2, phosphors according to Examples 9 to 13 had a decay time of about 5 ms or less, and a brightness greater than that of Comparative Example 1. From the results, it may be estimated that the phosphors according to Examples 9 to 13 exhibit a display driving property, e.g., a brightness saturation characteristic, which is superior to conventional phosphors.

Phosphors according to Reference Examples 1 to 3, including a second phosphor in greater amounts, and phosphors according to Comparative Example 3, including only the second phosphor, had good relative brightness. The decay times, however, were 5.062 ms, 5.708 ms, 6.354 ms, and 7 ms, respectively. As a result, they were not useful in a PDP displaying a 3D stereoscopic image.

### Examples 14 to 17 and Reference Examples 4 to 7

Green phosphors were prepared by mixing a first phosphor of (Y₃₋ₓCeₓ)Al₅O₁₂ (x is 0.03) with a second phosphor of Zn₂SiO₄:Mn, formed with a metal oxide layer including Al₂O₃ and MgO, in the compositions shown in Table 3.

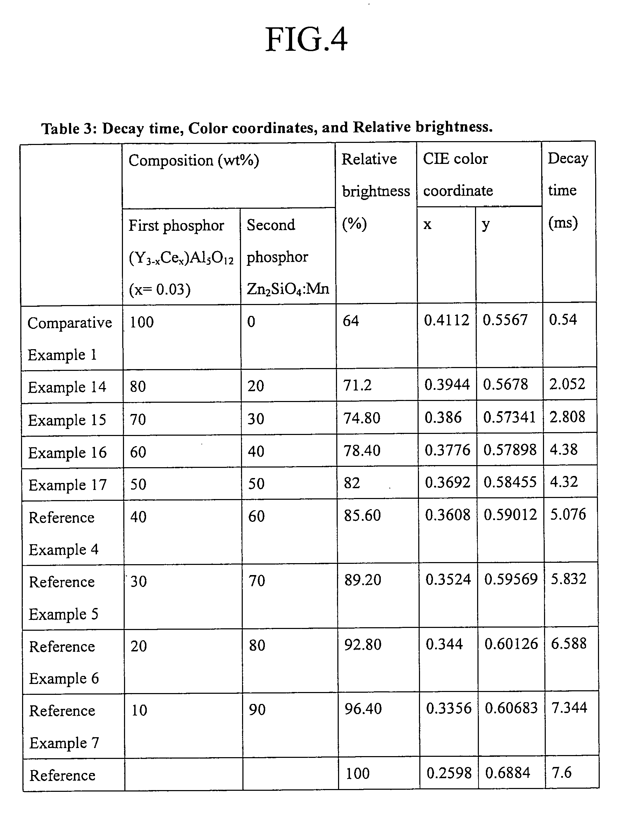

Phosphors prepared according to Examples 14 to 17, and Reference Examples 4 to 7 were measured for their relative brightness, color coordinate, and decay time, and the results are shown in Table 3 of FIG. 4. The relative brightness was calculated as a value relative to the reference value (100%) of a Zn₂SiO₄:Mn phosphor. For comparison, the color coordinate and decay time of Comparative Example 1 are also listed in Table 3.

As shown in Table 3, the phosphors prepared according to Examples 14 to 17 had a decay time of about 5 ms or less, and a relative brightness higher than the phosphor prepared according to Comparative Example 1. From the results, it may be estimated that phosphors according to Examples 14 to 17 exhibit a display driving property, e.g., a brightness saturation characteristic, which is superior to conventional phosphors.

Phosphors according to Reference Examples 4 to 7, including a second phosphor in greater amounts exhibited good relative brightness. The decay times, however, were 5.076 ms, 5.832 ms, 6.588 ms, and 7.3444 ms, respectively. As a result, they were not useful in a PDP displaying a 3D stereoscopic image.

### Examples 18 to 21

Green phosphors were prepared by mixing a first phosphor of (Y₃₋ₓCeₓ)Al₅O₁₂ (x is 0.03) and a second phosphor of Y₍₁₋ₓ₁₎Gdₓ₁Al₃(BO₃)_{4:}Tb (x1 is 0.4) and Zn₂SiO₄:Mn formed with a metal oxide layer including Al₂O₃ and MgO, in the compositions shown in Table 4.

### Comparative Example 4

A green phosphor was prepared using Zn₂SiO₄:Mn formed with a metal oxide layer including Al₂O₃ and MgO.

### Comparative Example 5

(Y₃₋ₓCeₓ)Al₅O₁₂ (x is 0.03) was used as a green phosphor.

### Comparative Example 7

Y₍₁₋ₓ₁₎Gdₓ₁Al₃(BO₃)₄:Tb (x1 is 0.4) was used as a green phosphor.

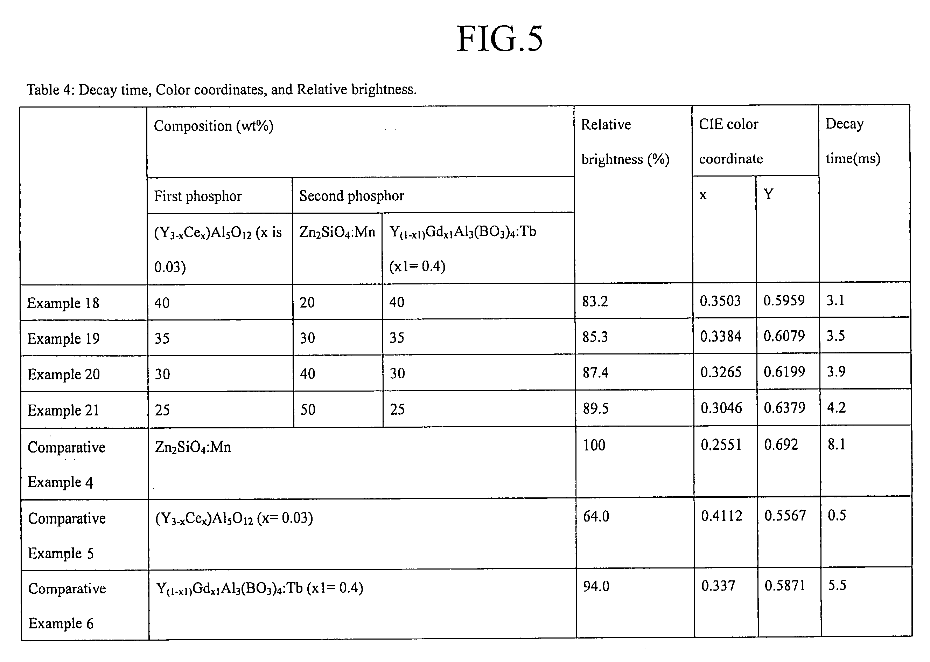

Phosphors prepared according to Examples 18 to 21 and Comparative Examples 4 to 6 were measured for their relative brightness, color coordinate, and decay time, and the results are shown in Table 4 of FIG. 5. The relative brightness was calculated as a value relative to the reference value (100%) of the brightness of the phosphor according to Comparative Example 5.

As shown in Table 4, phosphors according to Examples 18 to 21 had a decay time of about 5 ms or less. Phosphors according to Comparative Examples 4 to 6, including only a single green phosphor, exhibited larger decay times and deteriorated brightness.

### Examples 22 to 23 and Reference Examples 8 to 10

Green phosphors were prepared by mixing a first phosphor of (Y₃₋ₓCeₓ)Al₅O₁₂ (x is 0.03) with a second phosphor of Zn₂SiO₄:Mn and BaMgAl₁₀O₁₇:Mn in the compositions shown in the following Table 5.

### Comparative Example 7

BaMgAl₁₀O₁₇:Mn was used as a green phosphor.

The phosphors prepared according to Examples 22 to 23, Reference Examples 8 to 10, and Comparative Example 7 were measured for their relative brightness, color coordinate, and decay time, and the results are shown in Table 5. For comparison, the relative brightness, color coordinate, and decay time of Comparative Examples 4 and 5 are also shown in Table 5. In Table 5, the relative brightness was calculated as a value relative to the reference value (100%) of the brightness of the phosphor according to Comparative Example 4.

As shown in Table 5, phosphors according to Examples 22 to 23 had decay times of about 5 ms or less. Phosphors according to Reference Examples 8 to 10 and Comparative Examples 4, 5, and 7, including greater amounts of the second phosphor, or only the first or the second phosphor, exhibited large decay times and/or deteriorated brightness.

### Examples 24 to 27 and Reference Example 11

Green phosphors were prepared by mixing a first phosphor of (Y₃₋ₓCeₓ)Al₅O₁₂ (x is 0.03) and a second phosphor of Y₍₁₋ₓ₁₎Gdₓ₁Al₃(BO₃)_{4:}Tb (x1 is 0.4) and Li₂Zn(Ge,θ)_{z}O₈:Mn (θ=Ga, z is 3) in the compositions as shown in Table 6.

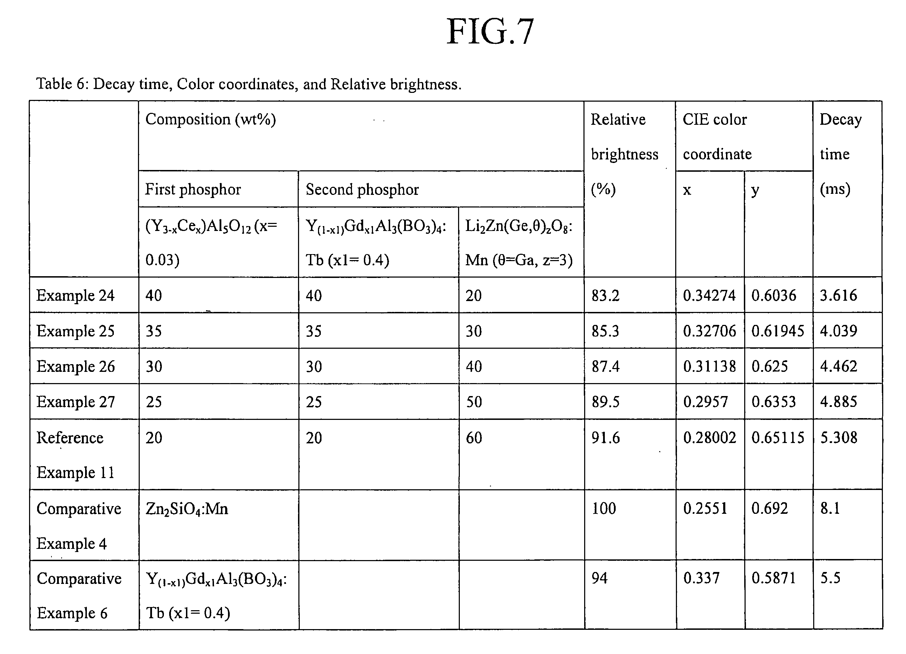

Phosphors according to Examples 24 to 27 and Reference Example 11 were measured for their relative brightness, color coordinate, and decay time, and the results are shown in Table 6 of FIG. 7. For comparison, the relative brightness, color coordinate, and decay time of the phosphors according to Comparative Examples 4 and 6 are also shown in Table 6. In Table 6, the relative brightness was calculated as a value relative to the reference value (100%) of the brightness of the phosphor according to Comparative Example 4.

As shown Table 6, the phosphors according to Examples 24 and 27 had decay times of about 5 ms or less. The phosphors according to Reference Example 11 and Comparative Examples 4 and 6, including greater amounts of the second phosphor, or only the first or the second phosphor, had longer decay times and/or deteriorated brightness.

A green phosphor having a short decay time and good brightness may be useful for the next generation virtual three-dimensional stereoscopic multimedia, which may be applied to fields of, e.g., telecommunications, broadcasting, medical, education, training, military, games, animation, virtual reality, CAD, industrial technology, and so on.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A green phosphor, comprising:
a first phosphor represented by Formula 1:
(Y₃₋ₓCex)ₐAl_{b}O_{c} (1),
wherein x, a, b, and c satisfy the relations: 0 < x ≤1, 0.5 ≤a ≤3, 3 ≤b ≤ 9, and 2c=9a + 3b; and
a second phosphor including at least one of:
Zn₂SiO₄:Mn,
YBO₃:Tb,
Y₍₁₋ₓ₁₎Gdₓ₁Al₃(BO₃)₄:Tb, wherein x1 satisfies the relation 0 ≤x1 ≤1,
Li₂Zn(Ge,θ)_{z}O₈:Mn, wherein θ includes Al or Ga, and z satisfies the relation 3 ≤z ≤4,
BaMgAl₁₀O₁₇:Mn,
BaMgAl₁₂O₁₉:Mn, and
Zn(Ga₁₋ₓ₂Alₓ₂)₂O₄:Mn, wherein x2 satisfies the relation 0.2 ≤x2 ≤0.8.

2. A green phosphor according to claim 1, wherein x, a, and b satisfy the relations: 0 < x ≤0.1, 0.5 ≤a ≤1.5, and 4 ≤b ≤6.

3. A green phosphor according to claim 1 or 2, wherein the first phosphor and the second phosphor are included in a weight ratio of about 10:90 to about 90:10.

4. A green phosphor according to claim 3, wherein the first phosphor and the second phosphor are included in a weight ratio of about 30:70 to about 60:40.

5. A green phosphor according to any one of claims 1 to 3, wherein
the second phosphor includes Y₍₁₋ₓ₁₎Gdₓ₁Al₃(BO₃)₄:Tb, and
the first phosphor and the second phosphor are included in a weight ratio of about 80:20 to about 10:90.

6. A green phosphor according to any one of claims 1 to 3, wherein
the second phosphor includes Li₂Zn(Ge,θ)_{z}O₈:Mn, and
the first phosphor and the second phosphor are included in a weight ratio of about 40:60 to about 80:20.

7. A green phosphor according to any one of claims 1 to 3, wherein
the second phosphor includes Zn₂SiO₄:Mn, and
the first phosphor and the second phosphor are included in a weight ratio of about 80:20 to about 50:50.

8. A green phosphor according to any one of claims 1 to 3, wherein
the second phosphor includes Zn₂SiO₄:Mn and Y₍₁₋ₓ₁₎Gdₓ₁Al₃(BO₃)₄:Tb and
the first phosphor and the second phosphor are included in a weight ratio of about 25:75 to about 40:60.

9. A green phosphor according to any one of claims 1 to 3, wherein
the second phosphor includes Zn₂SiO₄:Mn and at least one of BaMgAl₁₀O₁₇:Mn or BaMgAl₁₂O₁₉:Mn, and
the first phosphor and the second phosphor are included in a weight ratio of about 40:60 to about 45:55.

10. A green phosphor according to any one of claims 1 to 3, wherein
the second phosphor includes Y₍₁₋ₓ₁₎Gdₓ₁Al₃(BO₃)₄:Tb and Li₂Zn(Ge,θ)_{z}O₈:Mn, and
the first phosphor and the second phosphor are included in a weight ratio of about 25:75 to about 40:60.

11. A green phosphor according to any preceding claim, wherein the second phosphor further comprises a co-activator including Ce.

12. A green phosphor according to any preceding claim, wherein the Zn₂SiO₄:Mn further comprises a metal oxide layer.

13. A green phosphor according to claim 12, wherein the metal oxide layer includes at least one of Al₂O₃, MgO, Y₂O₃, and La2O₃.

14. A green phosphor according to any preceding claim, wherein the green phosphor has a decay time of about 5 ms or less.

15. A green phosphor according to claim 14, wherein the green phosphor has a decay time of about 0.5 ms to about 5 ms.

16. A green phosphor according to any one of claims 1 to 3, wherein the second phosphor includes Zn₂SiO₄:Mn and Y₍₁₋ₓ₁₎Gdₓ₁Al₃(BO₃)₄:Tb, and x1 satisfies the relation 0 ≤x1 ≤1.

17. A green phosphor according to claim 16, wherein the first and the second phosphors are included in a weight ratio of about 25:75 to about 40:60.

18. A green phosphor according to claim 16, wherein the Zn₂SiO₄:Mn and Y₍₁₋ₓ₁₎Gdₓ₁Al₃(BO₃)₄:Tb, are included in the second phosphor in a weight ratio of about 10:90 to about 80:20.

19. A display device, comprising:
a green phosphor according to any one of claims 1 to 18.

20. A display device according to claim 19, wherein the display device is arranged to realize three-dimensional stereoscopic images.
